Europäisches Patentamt

**European Patent Office**

**Office européen des brevets**

(19)

(11) Numéro de publication : **0 007 919**
**B1**

(12)

# FASCICULE DE BREVET EUROPÉEN

(45) Date de publication du fascicule du brevet :
**14.09.83**

(21) Numéro de dépôt : **79900674.7**

(22) Date de dépôt : **13.12.78**

(86) Numéro de dépôt international :
**PCT/FR 78/00048**

(87) Numéro de publication internationale :
**WO WO/79003 (12.07.79 Gazettee 79/14)**

(51) Int. Cl.³ : **B 61 H 13/24**, B 60 T 13/58,
F 15 B 11/06// B60T17/16,
B60T13/38

(54) **DISPOSITIF TRANSFORMATEUR D'EFFORTS.**

(30) Priorité : **15.12.77 FR 7737903**

(43) Date de publication de la demande :
**06.02.80 Bulletin 80/03**

(45) Mention de la délivrance du brevet :
**14.09.83 Bulletin 83/37**

(84) Etats contractants désignés :
**CH DE GB SE**

(56) Documents cités :
**DE A 1 909 337**
**FR A 1 570 264**
**US A 1 472 360**
**US A 2 376 475**

(73) Titulaire : **WABCO WESTINGHOUSE EQUIPEMENTS
FERROVIAIRES S.A.
2 boulevard Westinghouse
Sevran (Seine-Saint-Denis) (FR)**

(72) Inventeur : **DUBOIS, Claude
1, rue de Pixérecourt
F-75020 Paris (FR)**
Inventeur : **DALIBOUT, Georges
44 rue Jules Guesde
F-93220 Gagny (FR)**

(74) Mandataire : **Joly, Jean Jacques et al
CABINET BEAU DE LOMENIE 55, rue d'Amsterdam
F-75008 Paris (FR)**

Dispositif transformateur d'efforts

L'invention se rapporte à un dispositif transformateur d'efforts, du type comportant une enceinte scellée, étanche, logée dans un espace de confinement et remplie d'un fluide à comportement hydrostatique, la transformation d'efforts s'effectuant hydrostatique, la transformation d'efforts s'effectuant entre au moins un piston émetteur de pression, guidé axialement pour se déplacer dans un alésage débouchant sur l'espace de confinement et au moins un piston récepteur de pression également guidé axialement pour se déplacer dans un autre alésage débouchant sur l'espace de confinement.

Les dispositifs hydrauliques transformateurs d'efforts utilisés actuellement présentent des qualités remarquables d'étanchéité lorsqu'ils utilisent des enceintes hydrauliques scellées. Les vérins hydrauliques et les émetteurs de pression hydrauliques à piston, notamment ceux à piston plongeur sont capables de réaliser de longues courses égales à plusieurs fois le diamètre de l'alésage ou du piston mais il n'est pas possible de garantir l'étanchéité absolue de tels équipements.

Pour réaliser des transformateurs d'efforts compacts et fiables, il apparaît souhaitable d'utiliser des pistons hydrauliques de diamètres différents et une enceinte hydraulique scellée et étanche pour une longue période. De telles conditions ont déjà été réalisées notamment dans les transformateurs hydrostatiques d'efforts tels que celui décrit dans la DE-A-1 902 337 ou bien dans ceux utilisés dans les détendeurs de pesée hydropneumatique, mais de tels transformateurs à chambre hydrostatique scellée ne supportent pas de longues courses sur les pistons hydrauliques et ne sont pas capables de fournir le travail d'actionnement nécessaire pour l'application des freins des véhicules lourds, ferroviaires ou routiers.

Les transformateurs hydrostatiques d'efforts à longue course et à grande puissance d'actionnement tel que celui décrit dans le FR-A-1 570 264 sont tous réalisés avec des joints d'étanchéité à friction sensibles à l'usure et aux frottements et qui ne peuvent garantir une étanchéité parfaite et persistante dans le temps.

L'un des buts de la présente invention est de réaliser un organe de transformation d'efforts à fluide hydrostatique intermédiaire logé dans une enveloppe étanche scellée à vie et qui soit capable de supporter des courses d'actionnement relativement longues telles que celles d'un cylindre de frein pneumatique usuel.

A cet effet, le dispositif transformateur d'efforts, du type comportant une enceinte étanche, partiellement délimitée par et logée dans un espace de confinement et remplie d'un fluide à comportement hydrostatique, au moins un piston émetteur de pression guidé axialement pour se déplacer dans un alésage débouchant sur l'espace de confinement et au moins un piston récepteur de pression également guidé axialement pour se déplacer dans un autre alésage débouchant sur l'espace de confinement, est caractérisé en ce que : entre la paroi cylindrique extérieure de chacun desdits pistons et une paroi de l'espace de confinement cylindrique adjacent et sensiblement coaxial à l'alésage correspondant est ménagé un espace annulaire dans lequel est logé le pli annulaire d'une membrane roulante souple, délimitant l'enceinte en la rendant ainsi scellée et étanche, chacune des deux membranes comportant une partie centrale reliée à ou respectivement appliquée sur l'extrémité frontale du piston correspondant et une périphérie reliée de façon étanche à une paroi rigide à l'intérieur de l'espace de confinement pour obturer le débouché de l'alésage sur ledit espace de confinement, et la membrane roulante souple est, susceptible, d'une part, de venir s'appliquer sur les deux parois cylindriques sensiblement coaxiales du piston et de l'espace de confinement sous l'action de la pression différentielle appliquée à ladite membrane et supérieure à la pression régnant à l'extérieur de l'enceinte fermée et, d'autre part, de se replier sur elle-même pour s'enrouler et se dérouler autour du piston lorsque celui-ci se déplace, de telle manière que le comportement hydrostatique du fluide de l'enceinte scellée impose à la membrane d'au moins un piston récepteur de se dérouler lorsque la membrane d'au moins un piston émetteur pressurisant l'enceinte s'enroule et vice-versa, lorsqu'au moins un piston récepteur repousse le fluide de l'enceinte.

Les pistons émetteurs et/ou récepteurs peuvent être de diamètres différents de façon à réaliser une transformation d'efforts et être disposés selon des axes distincts et/ou non parallèles.

Selon une caractéristique importante de l'invention, le piston émetteur est celui de plus petit diamètre de façon à réaliser une amplification d'efforts sur le ou les pistons récepteurs.

Avantageusement, les deux pistons sont montés à l'opposé l'un de l'autre et de manière sensiblement coaxiale dans un corps commun et délimitent entre eux, l'enceinte scellée étanche constituant au moins une partie de l'espace de confinement et ces deux pistons sont positionnés de manière à pouvoir entrer en contact l'un avec l'autre lorsque l'enceinte scellée, étanche est vidée de son fluide, de manière à réduire le volume de l'enceinte scellée étanche et à permettre au piston émetteur de pousser le piston récepteur en cas de fuite dudit fluide.

Selon un premier mode de mise en œuvre de l'invention, appliqué à la transmission d'un effort de freinage, le piston émetteur est relié mécaniquement à un piston d'actionnement du frein de service tandis que le piston récepteur est relié mécaniquement à une tige d'actionnement d'un frein.

Selon un second mode de mise en œuvre de l'invention, l'intérieur de l'enceinte scellée étanche située entre le piston émetteur et le piston récepteur est relié de façon étanche par une conduite à une chambre constituant une autre enceinte scellée étanche délimitée par un autre piston émetteur susceptible d'être actionné par un organe de frein de secours tel qu'un cylindre de frein à ressort et/ou à verrou, ce deuxième émetteur étant muni également d'une membrane roulante, souple délimitant l'autre enceinte scellée étanche.

L'autre enceinte scellée étanche peut être prévue dans un corps distinct de celui abritant l'enceinte scellée étanche principale délimitée par un piston émetteur et être reliée à cette enceinte principale par une canalisation souple de plus faible diamètre que le piston émetteur et autorisant le déplacement relatif des deux corps.

La présente invention se caractérise en outre par les points qui vont être énumérés ci-après.

Le bord périphérique extérieur de la membrane roulante d'au moins un piston est serré de façon étanche entre deux pièces rigides dont l'une porte l'alésage du piston et l'autre pièce délimite l'espace de confinement ou bien délimite directement par sa paroi inférieure, la paroi de l'enceinte scellée, étanche.

Deux conduits de remplissage en fluide de l'enceinte scellée étanche, dont l'un est susceptible de déboucher en un point haut de l'enceinte au moment du remplissage de celle-ci pour permettre d'évacuer l'air de l'enceinte par mise en circulation du fluide au moment du remplissage à partir de l'autre conduit, sont prévus dans l'autre pièce et/ou dans le piston débouchant sur l'enceinte scellée étanche.

Le bord périphérique intérieur et/ou extérieur d'au moins l'une des membranes roulantes comporte au moins une nervure annulaire faisant saillie sur l'une des faces dudit bord réalisé en un matériau élastomère et de plus, ce bord est logé dans une rainure de la paroi rigide délimitant l'espace de confinement, cette rainure présentant une section telle que la nervure annulaire est refoulée à l'intérieur de la masse d'élastomère dudit bord.

Tous les espaces annulaires à l'extérieur de l'enceinte scellée peuvent communiquer entre eux et être sensiblement isolés de l'atmosphère extérieure par tout moyen approprié tel que joint ou moyen de filtrage.

La position extrême de recul en position inactive du piston récepteur est délimitée par une butée du piston émetteur de telle façon que le ressort de rappel du piston récepteur vers la position inactive applique au fluide de l'enceinte une surpression par rapport à la pression régnant dans les espaces annulaires à l'extérieur de l'enceinte scellée.

Les membranes roulantes d'au moins deux pistons émetteur et/ou récepteur sont incluses dans un manchon élastique monobloc délimitant au moins une partie de l'enceinte scellée, étanche et comportant une ouverture unique qui vient se refermer de façon étanche par un rebord annulaire sur l'un des pistons émetteur ou récepteur, les parties du manchon élastique autres que les membranes roulantes venant en appui soit sur les parois internes de l'espace de confinement, soit sur la face frontale de l'autre piston émetteur ou récepteur.

D'autres buts, avantages et caractéristiques de la présente invention apparaîtront à la lecture de la description qui va suivre faite à titre non limitatif et en ragard du dessin annexé où :

la figure 1 est une vue en coupe axiale d'un mode de réalisation de l'invention, selon lequel le dispositif fonctionne en amplificateur de pression associé à un cylindre de frein à ressort et à verrou ;

la figure 2 est une vue représentative schématique d'un ensemble de freinage de bogie ferroviaire avec un agrandissement en coupe axiale du dispositif selon l'invention utilisé pour freiner deux roues situées du même côté de la voie à partir d'un cylindre unique agissant sur deux pistons se déplaçant en sens opposé.

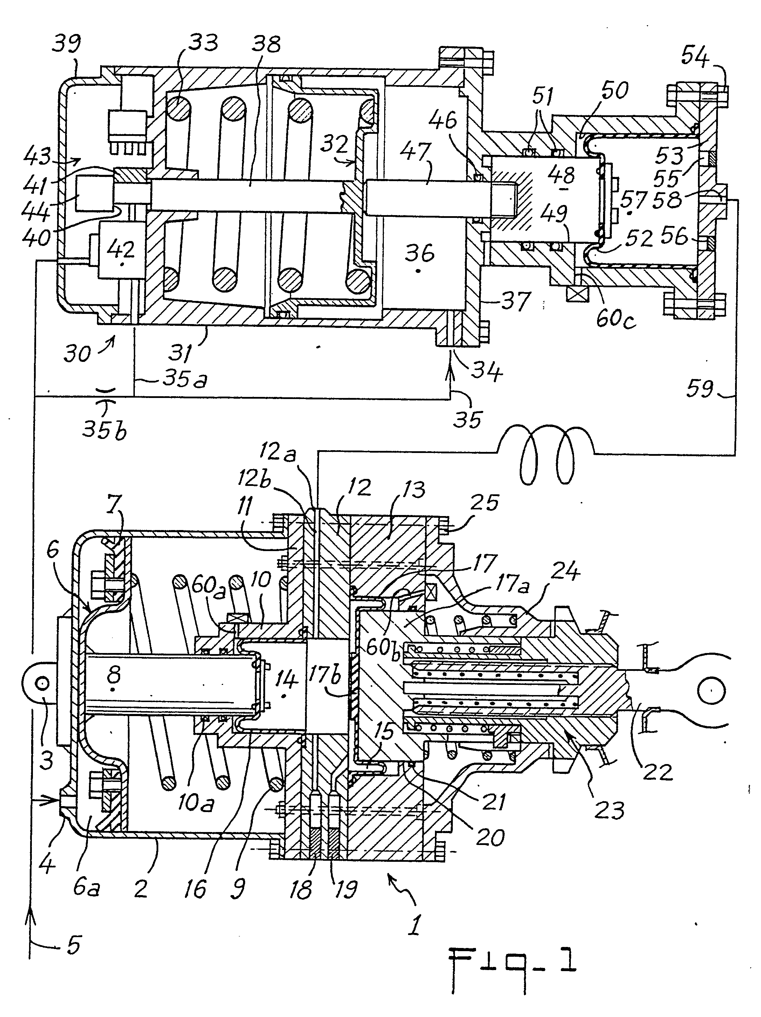

A la partie inférieure de la figure 1 est représenté un cylindre de freinage 1 avec un amplificateur d'efforts conforme à l'invention et muni d'un dispositif de rattrapage de jeu de type connu à vis/écrou à pas réversible.

Dans le corps cylindrique 2 en tôle emboutie, muni d'une oreille de fixation 3 et d'un ajutage 4 d'arrivée de fluide sous pression relié à une conduite 5, évolue un piston 6 équipé d'un joint annulaire 7. Le piston 6 et une tige de commande 8 à laquelle il est par exemple soudé sont susceptibles de se diriger vers la droite sous l'effet de la pression régnant dans la chambre 6a à l'encontre de l'effort d'un ressort de rappel 9.

La tige de commande 8 peut coulisser dans un guide cylindrique 10 muni de joints circulaires 10a, ce guide appartenant à un premier flasque 11 d'un ensemble de flasques annulaires 11, 12 et 13 dont l'empilage délimite une cavité constituant un espace de confinement 14, 15 composé de deux chambres cylindriques étagées de diamètres différents 14 et respectivement 15, remplies par un fluide à comportement hydrostatique capable de transmettre la pression régnant dans l'espace de confinement dans toutes les directions, ce fluide étant généralement considéré du fait de sa faible compressibilité comme un fluide incompressible tel que de l'huile. A l'extrémité droite de la tige 8 est fixée une membrane élastique 16. A cet effet, la première chambre cylindrique 14 présente un diamètre supérieur à celui de la tige 8 et d'une valeur suffisante pour permettre le va-et-vient roulant de la membrane 16 en forme de manchon, constituée par exemple d'une toile enduite sur l'une de ses faces au moins d'un élastomère approprié. Cette membrane 16 forme un pli dans l'espace annulaire ménagé entre l'extrémité droite de la tige 8 et la surface cylindrique intérieure de la première chambre cylindrique 14. La membrane 16 coiffe à gauche, l'extrémité droite de la tige 8 et se trouve coincée à droite, d'une manière étanche, entre les flasques 11 et 12. Comme elle est soumise à la pression d'un fluide incompressible emprisonné dans l'espace de confinement 14, 15, la membrane 16 en forme de manchon élastique se plaque sur toutes les parois qui lui sont offertes en formant un pli mobile étanche s'enroulant et se déroulant à la manière d'un doigt de gant sur l'extrémité de la tige 8 au cours du va-et-vient de l'ensemble piston 6 et tige 8. Par abréviation, on peut donc qualifier la membrane 16 de membrane roulante. A sa partie droite, l'espace de confinement 14, 15 présente une chambre cylindrique de grand diamètre 15 fermée par une membrane 17 coiffant un piston récepteur mobile 17a disposé face à l'extrémité droite de la tige 8 coiffée de la membrane roulante 16, cet ensemble 8, 16 jouant le rôle d'émetteur. Le piston récepteur mobile 17a est coiffé tout comme la tige émettrice 8 par la membrane roulante 17 qui forme un manchon d'un diamètre approprié et qui est disposée en opposition à la première membrane 16. Cette membrane 17 roule dans l'espace annulaire ménagé entre le piston 16 et un alésage de diamètre approprié du flasque 13 précité. A l'intérieur de l'espace de confinement hydrostatique ainsi compris et délimité entre les membranes étanches 16, 17 et les parois latérales constituées par les alésages centraux des flasques empilés 11, 12, 13, on introduit et emprisonne un fluide incompressible à l'aide respectivement de conduits d'alimentation et de purge 18 et 19. La membrane 17 comporte éventuellement une sur-épaisseur 17b susceptible d'amortir un contact accidentel entre l'extrémité droite de la tige 8 et la membrane 17.

A droite de la figure 1, le piston récepteur 17a coulisse dans un alésage de guidage 20 muni de joints d'étanchéité 21 et actionne une tringlerie ou un sabot de frein par l'intermédiaire d'une tige de freinage 22. Entre le piston récepteur 17a et la tige 22, un dispositif de rattrapage ou un régleur 23 à fonctionnement manuel ou automatique peut être prévu, afin de rattraper l'excès de jeu pouvant exister entre les garnitures de frein et les pistes de friction correspondantes du véhicule.

Ce dispositif de rattrapage est renfermé dans une cloche de guidage 24, rattachée à l'empilage des flasques 11, 12, 13 et au corps 2 par des boulons communs 25.

A la partie supérieure de la figure 1 est représenté un dispositif complémentaire constituant un second mode de mise en œuvre de l'invention, à savoir un cylindre à ressort susceptible d'être associé au cylindre de freinage qui vient d'être décrit.

Ce cylindre à ressort 30 comprend un corps 31 renfermant un piston de commande 32, susceptible d'être repoussé vers la gauche à l'encontre de l'effort de rappel d'un ressort 33, sous l'effet d'une pression de fluide amenée à la chambre de pression 36 par un ajutage 34 et une conduite 35.

La chambre 36, délimitée par le piston 32 et un fond 37 du corps 31, est reliée à une valve de commande non représentée par le raccord 34. Selon l'état de la valve de commande, la chambre 36 est reliée à la décharge ou bien soumise à la pression graduée du freinage de service ; cette pression s'exerce sur le piston dit de service 6, dans le sens du serrage des freins et sur le piston dit de desserrage 32, dans le sens de desserrage des freins, en opposition à la force de réaction du ressort 33.

Le piston de desserrage 32 est solidaire d'une tige 38 comportant une gorge 40 dans laquelle peut s'enclencher un verrou 41 constitué à titre d'exemple par une gâchette transversale. Le verrou 41 peut être commandé par voie pneumatique, hydraulique ou électromagnétique ; dans l'exemple représenté, il est commandé par voie électropneumatique, l'air comprimé arrivant à l'électrovalve 42 par les conduits 5, 35a et 35 étranglé en 35b.

L'organe de commande électropneumatique comprend un piston de déverrouillage dans un corps susceptible d'être soumis à la pression de freinage de service par l'intermédiaire d'une électrovalve dont les contacts sont en 43. Il est prévu un verrouillage manuel de sécurité du piston d'immobilisation par exemple à l'aide d'une vis non représentée.

On notera que le dispositif représenté est très peu encombrant du fait de l'emplacement du verrou 41 et de l'électrovalve 42 à une extrémité du corps 31, avec un accès facilité par un couvercle démontable 39. Cette disposition permet donc à la fois, de protéger l'électrovalve 42 et les contacts électriques 43 et de remplacer sans difficultés un composant défectueux du verrou ou de son organe de commande sans avoir à démonter le corps.

Un dispositif de desserrage manuel peut être prévu pour coopérer avec l'extrémité 44 de la tige 38 ; ce dispositif peut être d'un type quelconque, notamment à vis ou à verrou.

La liaison entre le cylindre à ressort et le cylindre de freinage est réalisée de la façon suivante. Le fond 37 présente un alésage de guidage rendu étanche par un joint circulaire 46 et traversé par un poussoir cylindrique 47 solidaire d'un petit piston 48 évoluant dans deux alésages 49 et 50 ; le premier alésage 49 d'un diamètre égal à celui du piston 48 est muni de joints d'étanchéité circulaires 51, le second alésage 50 est d'un diamètre supérieur à celui du piston 48 de manière à permettre le logement et le roulement d'une membrane roulante 52 du même type et fonctionnant de la même façon que l'une ou l'autre des membranes roulantes en opposition 16 et 17 précédemment décrites. Le second alésage 50 est fermé par un fond 53 fixé par des boulons 54 et présentant des orifices de remplissage et de purge 55 et respectivement 56 pour introduire et emprisonner un fluide incompressible dans une chambre 57 délimitée par la membrane 52 et par le fond 53. Cette chambre 57 fonctionne comme émetteur de pression de fluide et est reliée via un raccord 58 par une conduite 59 à un ajutage 12a et à un conduit interne 12b du flasque 12 de l'amplificateur d'efforts du corps de cylindre de freinage précédemment décrit en référence à la partie inférieure de la figure 1, le conduit 12b débouchant comme on le voit sur la figure 1 à l'intérieur de la chambre 14.

Dans ce mode de réalisation, tous les espaces de confinements, dans le but de permettre un roulement aisé et non destructif des membranes, sont reliés à l'air libre par des passages 60a, 60b, 60c protégés par des filtres.

L'ensemble du système de freinage représenté à la figure 1, fonctionne de la façon qui va maintenant être décrite. En marche normale, les pièces mobiles de ce dispositif occupent les positions représentées sur la figure 1. La chambre 36 est à l'atmosphère, le piston de desserrage 32 étant cependant maintenu en position arrière par le verrou 41 qui est enclenché dans la gorge 40. Le ressort 33 est donc comprimé et le piston de freinage de service 6 est en butée contre le fond de son cylindre 2 sous l'action du ressort de rappel 9.

Quand l'opérateur décide d'effectuer un freinage de service, il fait délivrer par l'intermédiaire d'un distributeur non représenté, une pression d'air comprimé de freinage de service dans la chambre 6a ; la tige 8 se déplace vers la droite et met sous pression les chambres de confinement hydrostatiques 14, 15 et 57. Le petit piston 48 étant bloqué par le ressort 33, seul le piston récepteur 17a de section supérieure à celle de l'émetteur constitué par la tige 8, est repoussé vers la droite par la pression hydrostatique. La membrane 16 s'enroule autour de la tige 8 tandis que la membrane 17 se déroule sans frottement autour de la paroi extérieure lisse du piston 17a qui entraîne la tige filetée 22 en position de serrage des freins avec un effort d'application multiplié par le dispositif.

Pour immobiliser le véhicule en position d'attente ou de parc, on provoque un serrage des freins à la pression pneumatique maximale dans les chambres 6a et 36. Le piston 32 soulage le verrou 41 de l'effort axial normalement exercé sur lui par le ressort 33 et pour déclencher le freinage de parc par le ressort 33, il suffit de désexciter l'électrovalve 42.

A la suite de cette mise en position de freinage de parc, si la conduite de freinage 5 est mise à l'échappement ou présente une fuite, la pression régnant dans la chambre 36 tombe au-dessous d'une valeur pour laquelle le piston 32 se déplace vers la droite de la figure et repousse le poussoir 47 et le piston 48 pour réduire le volume de la chambre 57. L'action du ressort 33 se substitue ainsi progressivement à l'effort que produit la pression pneumatique sur le piston 6 et la tige 8 pour mettre sous pression les chambres de confinement hydrostatiques 14, 15 et 57 par l'intermédiaire de la conduite hydraulique souple 59 qui en combinaison avec les conduites pneumatiques souples 5 et 35 permet de loger le cylindre de frein de secours à ressort 30 à distance du cylindre de service 1.

Pour desserrer le frein de parc, le conducteur du véhicule remet le frein de service sous pression à l'aide de l'électrovalve modérable qui permet le passage de l'air comprimé dans la conduite 35 vers la chambre 36. Il y a dès lors substitution progressive à l'action du ressort 33 sur le piston 32 de celle de la pression sur le piston 6. Quand le piston de desserrage 32 est revenu en position arrière, le conducteur du véhicule ayant mis sous tension l'électrovalve 43, le verrou 41 sollicité par son ressort de rappel retombe dans la gorge 40 et déplace un interrupteur de contrôle triple.

Ceci supprime l'affichage des indicateurs et fait cesser la coupure du circuit électrique de l'électrovalve modérable. On peut donc mettre sous tension l'électrovalve modérable et provoquer le desserrage du frein à friction tandis que le frein d'immobilisation reste verrouillé.

Si, pour une raison quelconque, il était impossible d'atteindre dans la chambre 36, une pression de desserrage suffisante, on agirait, soit par la pièce de recul manuel du régleur 23, soit par le dispositif de desserrage manuel associé à l'extrémité 44 de la tige 38 pour faire reculer le piston 32. On exciterait ensuite l'électrovalve 43, afin que le ressort de rappel repousse le verrou 41 dans la gorge 40.

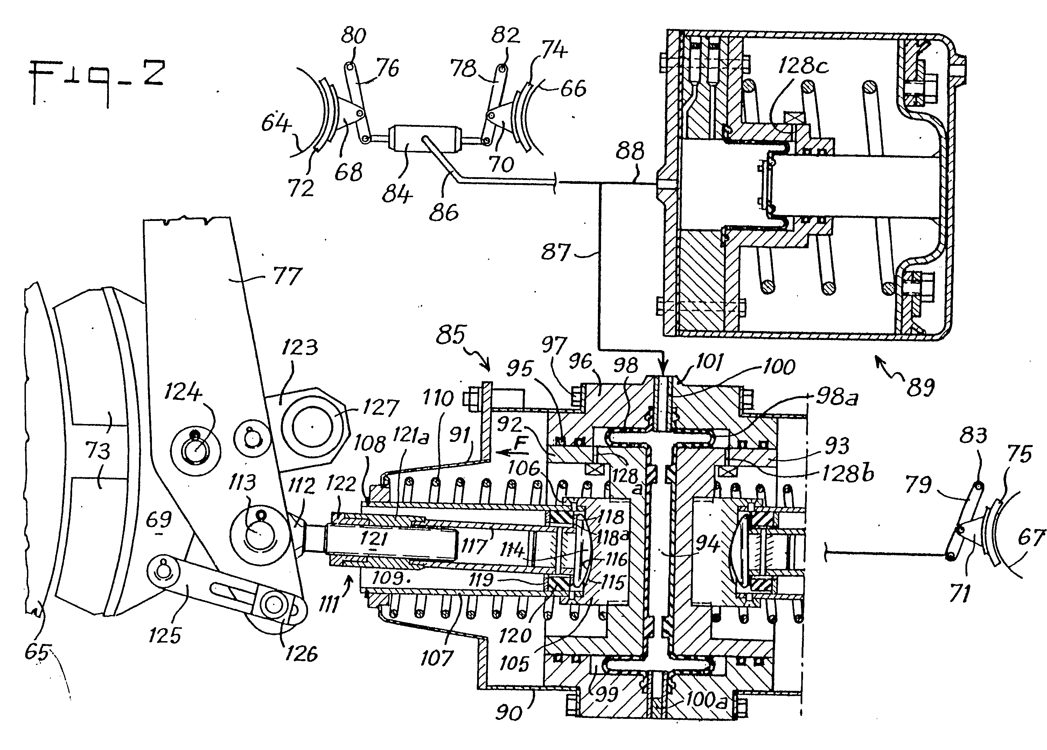

A la figure 2 qui représente le schéma d'un bogie, l'essieu avant du châssis de bogie est solidaire de roues 64 et 65 et de même, l'essieu arrière est solidaire de roues 66 et 67. En regard des bandages de ces roues 64 à 67, sont disposés des porte-semelles 68 à 71 respectivement qui sont munis chacun d'au moins une semelle 72 ou 73 à 75 et qui sont articulés sur des bras de suspension 76 à 79 sensiblement verticaux. A leur extrémité supérieure, les bras 76 à 79 sont montés pivotants autour d'axes 80 à 83 portés par le châssis de bogie.

Suivant l'invention et ainsi que cela ressort clairement de la figure 2, les deux bras de suspension situés d'un même côté longitudinal du bogie considéré sont reliés à un cylindre de frein unique dans lequel sont montés coulissants deux pistons internes montés en opposition et reliés chacun au bras correspondant par l'intermédiaire d'une bielle de poussée. C'est ainsi qu'un cylindre de frein à double piston 84 est interposé entre les bras de suspension 76 et 78 et qu'un autre cylindre de frein à double piston 85 est interposé entre les bras 77 et 79, les quatre bielles de poussée de ces deux cylindres de frein étant articulés sur les extrémités inférieures desdits bras 76 à 79.

Enfin, les cylindres de frein 84 et 85 du bogie sont reliés par des canalisations souples 86 et 87 à la tubulure de sortie 88 d'un cylindre de commande 89 de l'installation de freinage. Les tuyauteries 86 et 87 débouchent dans une chambre intermédiaire de chacun des cylindres de freins précités, délimitée par deux pistons opposés correspondants.

La description qui suit concerne plus particulièrement la réalisation d'un cylindre de frein selon l'invention et la liaison de l'une de ses bielles de poussée avec le bras correspondant, ce qui est illustré en détail en bas et à gauche de la figure 2, laquelle se rapporte au cylindre de frein 85 et au bras 77 et représente des organes utilisables pour l'autre cylindre de frein 84 et les divers bras de suspension.

Le cylindre de frein 85 de l'invention comporte un corps tubulaire 90 fermé à ses extrémités par des fonds 91 et dans lequel sont montés coulissants deux pistons opposés 92 et 93, délimitant dans ledit corps une chambre intermédiaire 94 reliée à la canalisation 87. Le piston 93 est destiné à être relié au bras 79 de la même manière que décrite ci-dessous en ce qui concerne la liaison du piston 92 avec le bras 77.

Le piston 92 est constitué d'un corps creux, cylindrique, coulissant de façon étanche grâce à des joints annulaires 95 dans l'alésage correspondant d'un flasque 96 fixé au corps 90 par des boulons 97. Le piston 92, tout comme la tige émettrice 8 de la figure 1, est coiffé d'une membrane roulante 98, évoluant à l'intérieur d'un espace annulaire 99 prévu à cet effet. Les bords extérieurs de cette membrane sont coincés d'une manière étanche entre le flasque 96 et un flasque médian 100 présentant un raccord 101 au conduit 87 précité ainsi que des orifices de remplissage et de purge pour la chambre 94 démimitée par la membrane 98 et une membrane symétrique 98a montée face à elle sur le piston opposé 93. Un seul des orifices de remplissage et de purge est visible et est affecté du repère 100a.

Un noyau cylindrique 105 fixé par exemple par vissage dans l'intérieur du piston 92 présente en saillie, à l'opposé de la chambre 94 et concentriquement à l'axe du corps 90, un brossage annulaire 106 dans lequel est montée puis fixée au moyen de vis, une tige tubulaire 107, de diamètre relativement grand. Cette tige tubulaire 107 du piston est guidée axialement dans le fond 91 et sa course vers l'intérieur du corps 90 est limitée par un anneau 108 habituellement connu sous le nom de circlip. Il résulte de ce qui précède qu'un passage libre 109 est prévu à travers la tige tubulaire 107, pour le logement d'une bielle d'actionnement des freins.

La chambre 94 remplie d'un fluide hydrostatique est reliée par un circuit scellé à un émetteur hydropneumatique 89 à une seule membrane roulante pour la description duquel il suffit de se reporter à la moitié de gauche du cylindre de freinage du bras de la figure 1. La chambre hydraulique de l'émetteur 89 est sensiblement analogue à celle faisant suite au cylindre à ressort du haut de la figure 1.

Le serrage des freins se produit lorsque le piston 92 est déplacé dans le sens de la flèche F sous l'action de la pression hydrostatique régnant dans la chambre intermédiaire 94. Le desserrage des freins se produit par contre, lorsque le piston 92 est déplacé en sens inverse sous l'action d'un ressort 110 entourant la tige 107 et interposé entre le fond 91 et le piston 92 pour rappeler celui-ci vers la droite lorsque la pression hydrostatique diminue.

Le piston 92 est relié au bras 77 par l'intermédiaire d'une bielle de poussée 111 dont le pied 112 en forme d'œilleton est intercalé entre deux éléments parallèles du bras 77 et traversé, ainsi que ces éléments par un axe d'articulation 113. La tête 114 de la bielle 111 est susceptible de pivoter en un point situé le plus près possible du sommet du piston 92. A cet effet, le noyau 105 présente à l'intérieur du brossage annulaire 106, une portée en forme de cuvette 115 contre laquelle est appliquée une surface de contact convexe 116 de la tête 114 de la bielle 111. De préférence, la portée 115 et la surface 116 ont la forme de secteurs sphériques dont les rayons de courbure sont légèrement différents. Dans la forme de réalisation représentée, la tête 114 est rapportée dans le corps tubulaire 117 de la bielle 111 et dans ce but, elle est prolongée par un embout cylindrique engagé dans ce corps et maintenu par une goupille. De toute façon, la tête 114 fait saillie hors du corps 117 et présente à l'opposé de la surface de contact 116, un épaulement d'appui 118.

De plus, la tige tubulaire 107 du piston 92 est solidaire d'une collerette saillante, interne 119 dont le trou central a un diamètre plus grand que celui du corps 117 de la bielle 111. Un manchon 120 en élastomère est logé dans la tige 107 et interposé entre la collerette 119 et une rondelle 118a appliquée contre l'épaulement 118.

Etant donné que le point de pivotement de la tête 114 de la bielle 111 est situé très près du sommet du piston 92, le débattement angulaire de cette bielle est relativement faible car la bielle possède une longueur maximale et ce débattement n'est pas limité par la collerette interne 119 de la tige de piston 107, puisque le passage ménagé dans cette collerette est plus grand que la section du corps 117 de la bielle.

En outre, il est important de noter que lors du serrage du frein (sens de la flèche F), l'effort hydraulique est transmis directement du piston 92 à la bielle de poussée 111, alors qu'au desserrage (sens opposé à celui de la flèche F), l'effort de rappel dû au ressort 110 agissant sur le piston 92 est transmis, par l'intermédiaire de la tige tubulaire 117 du piston, de la collerette interne 119 et du manchon élastique 120, à la tête de bielle 114.

Enfin, le pivotement de la bielle 111, lié au déplacement du piston 92 qui dépend de l'usure du bandage de roue et de la semelle de frein, est possible car le manchon 120 interposé entre la tête 114 et la collerette 119 est en matière plastique.

Dans la forme de réalisation représentée, la bielle de poussée 111 est réglable en longueur. Dans ce but, le pied 112 est prolongé par une tige filetée 121 coopérant avec un écrou 121a solidaire du corps 117 et avec un contre-écrou 122. On peut donc lors d'un réglage initial de la longueur de la bielle 111 (réglage qui est facilité grâce à la présence de la rondelle de frottement 118a rendant la rotation plus aisée), déterminer avec précision la distance entre la semelle de frein et le bandage de roue, lorsque les cylindres de freins ne sont pas alimentés. Lorsque cette semelle et/ou ce bandage s'usent, le jeu précité varie et il en est de même de la course du piston correspondant. Cependant, la pression maximale de freinage appliquée sur la roue reste constante et limitée à la valeur choisie, du fait de la présence d'un dispositif limiteur de pression maximale incorporé dans le distributeur. Les deux éléments du bras 77 sont solidarisés grâce à une pièce intermédiaire 123 supportant, de mêmê que lesdits éléments, l'axe 124 d'articulation du porte-semelle 69. Ce dernier est en outre, relié au bras 77 par l'intermédiaire d'une coulisse inférieure 125 réglable automatiquement et assujettie à cet effet à un presseur 126. De plus, pour soulager les deux bras 76 et 77, en ce qui concerne les efforts latéraux de déversement qu'ils subissent et qui sont dus aux réactions obliques des bandages de roues sur les semelles de freins, la pièce 123 du bras 77 et la pièce correspondante du bras 76 sont rendues solidaires l'une de l'autre, grâce à un tube d'entretoisement 127.

Dans ce mode de réalisation, tous les espaces extérieurs au voisinage des membranes roulantes, dans le but de permettre un roulement aisé et non destructif de ces membranes sont reliés à l'air libre par des conduites 128a, 128b, 128c protégées par des filtres.

Des variantes de l'invention vont maintenant être explicitées.

Ainsi, on doit comprendre que le dispositif transformateur d'efforts réalise également la fonction de déplacement des points d'application des efforts ainsi que la multiplication de ces points d'application. De même, les cylindres à double piston 84 ou 85 peuvent être remplacés par un cylindre récepteur à piston unique et à régleur tel que le cylindre 1 de la figure 1, interposé à l'aide de l'oreille 3 et de la tige 22 entre les bras 77 et 79 et respectivement 76 et 78 ou entre les tubes d'entretoisement 127.

La conduite souple 59 qui relie la chambre hydrostatique 57 aux chambres hydrostatiques 14 et 15 doit, pour conserver la parfaite étanchéité du circuit hydrostatique être montée de préférence en atelier de façon définitive avant la purge de l'air contenu dans le circuit hydrostatique. Cette liaison permanente entre le cylindre amplificateur d'efforts 1 et le cylindre à ressort 30 n'empêche cependant pas de monter à distance ces deux cylindres pour les loger au mieux dans les espaces libres du bogie en conservant l'avantage d'interdire de façon certaine, l'addition des efforts du frein de service et du frein de secours, seule la plus élevée des deux pressions hydrostatiques étant prise en compte. En cas de défaillance du régleur 23, le frein à ressort peut imposer un supplément de course au piston récepteur 17a.

De même, à la figure 2, on doit comprendre que les conduites 86, 87, 88 sont des conduites souples ou possédant des parties souples pour constituer l'enceinte hydrostatique scellée, remplie d'un fluide hydraulique tel que de l'huile. Les différentes chambres hydrostatiques sont reliées entre elles par ces conduites souples et sont remplies de liquide hydraulique puis purgées complètement d'air par circulation du liquide hydraulique entre deux raccords extérieurs tels que 18-19 ou 55-56 ou 101-100a, le raccord de sortie étant placé en position haute.

Les conduites de liaison des chambres hydrauliques telles que les conduites 59 ou 86, 87, 88 peuvent présenter une faible section car les pressions hydrostatiques sont nettement plus élevées que les pressions pneumatiques dans les chambres 6a et 36 et les volumes de fluide échangés entre ces chambres hydrostatiques sont faibles.

Pour le montage des dispositifs transformateurs d'efforts sur le châssis d'un véhicule, les divers cylindres restent reliés hydrauliquement entre eux, mais il est possible de fixer ces éléments sur le châssis les uns après les autres et de glisser les conduites hydrauliques souples dans le châssis. On peut également prévoir d'obturer avant montage les raccords de sortie hydrauliques des cylindres tels que les raccords 12a, 58 ou 101 par des bouchons. Au moment du montage des cylindres sur le châssis du véhicule, on pourrait alors relier ces raccords par des conduites hydrauliques souples ou rigides remplies de fluide hydrostatique et ouvrir les raccords pour réaliser un circuit hydrostatique scellé.

## Revendications

1. Dispositif transformateur d'efforts, du type comportant une enceinte étanche, partiellement délimitée par et logée dans un espace de confinement (14, 15) et remplie d'un fluide à comportement hydrostatique, au moins un piston émetteur de pression (8) guidé axialement pour se déplacer dans un alésage débouchant sur l'espace de confinement et au moins un piston récepteur de pression (17a) également guidé axialement pour se déplacer dans un autre alésage (20) débouchant sur l'espace de confinement, caractérisé en ce qu'entre la paroi cylindrique extérieure de chacun desdits pistons (8, 17a) et une paroi de l'espace de confinement (14, 15) cylindrique adjacent et sensiblement coaxial à l'alésage correspondant èst ménagé un espace annulaire dans lequel est logé le pli annulaire d'une membrane roulante souple (16, 17) délimitant l'enceinte en la rendant ainsi scellée et étanche, chacune des deux membranes (16, 17) comportant une partie centrale reliée à ou respectivement appliquée sur l'extrémité frontale du piston correspondant (8, 17a) et une périphérie reliée de façon étanche à une paroi rigide à l'intérieur de l'espace de confinement (14, 15) pour obturer le débouché de l'alésage sur ledit espace de confinement et en ce que la membrane roulante souple est susceptible, d'une part, de venir s'appliquer sur les deux parois cylindriques sensiblements coaxiales du piston (8, 17a) et de l'espace de confinement (14, 15) sous l'action de la pression différentielle appliquée à ladite membrane et supérieure à la pression régnant à l'extérieur de l'enceinte fermée et, d'autre part, de se replier sur elle-même pour s'enrouler et de dérouler autour du piston (8, 17a), lorsque celui-ci se déplace dans l'espace de confinement (14, 15) de telle manière que le comportement hydrostatique du fluide de l'enceinte scellée impose à la membrane d'au moins un piston récepteur (17a) de se dérouler, lorsque la membrane (16) d'au moins un piston émetteur (8) pressurisant l'enceinte s'enroule et viceversa, lorsqu'au moins un piston récepteur repousse le fluide de l'enceinte.

2. Dispositif transformateur d'efforts selon la revendication 1, caractérisé en ce que les pistons (8 et 17a) sont de diamètre différents de façon à réaliser une transformation de la valeur des efforts.

3. Dispositif transformateur d'efforts, selon les revendications 1 et 2, caractérisé en ce que les pistons émetteur (48) et récepteur (17a) sont disposés selon des axes distincts et/ou non parallèles.

4. Dispositif transformateur d'efforts, selon l'une des revendications 1 à 3, caractérisé en ce que le piston émetteur (8) est celui de plus petit diamètre de façon à réaliser une amplification d'efforts sur le ou les piston(s) récepteur(s) (17a).

5. Dispositif selon l'une des revendications 1, 2 ou 3, caractérisé en ce que les deux pistons (8 et 17a) sont montés à l'opposé l'un de l'autre et de manière sensiblement coaxiale dans un corps commun (2, 11, 12, 13, 24) et délimitent entre eux, l'enceinte scellée étanche constituant au moins une partie de l'espace de confinement (14, 15).

6. Dispositif selon la revendication 5, caractérisé en ce que les deux pistons (8, 17a) sont positionnés de manière à pouvoir entrer en contact l'un avec l'autre, lorsque l'enceinte scellée étanche est vidée de son fluide, de manière à réduire le volume de l'enceinte scellée étanche et à permettre au piston émetteur d'actionner lui-même le piston récepteur en cas de fuite dudit fluide.

7. Dispositif selon l'une des revendications 1 à 6, appliqué à la transmission d'un effort de freinage, caractérisé en ce que le piston émetteur (8) est relié mécaniquement à un piston d'actionnement du frein de service (6), tandis que le piston récepteur (17a) est relié mécaniquement à une tige (22) d'actionnement d'un frein.

8. Dispositif selon la revendication 7, caractérisé en ce que l'intérieur de l'enceinte scellée étanche située entre le piston émetteur (8) et le piston récepteur (17a) est relié de façon étanche par au moins une conduite (59) à une chambre (57) constituant une autre enceinte scellée étanche délimitée par un autre piston émetteur (48) susceptible d'être actionné par un organe de frein de secours tel qu'un cylindre de frein à ressort et/ou à verrou (30), ce deuxième piston émetteur (48) étant muni également d'une membrane roulante souple (52) délimitant l'autre enceinte scellée étanche.

9. Dispositif selon la revendication 7, caractérisé en ce qu'au moins une autre enceinte scellée étanche ou chambre intermédiaire (57) est prévue dans un corps (37-53) distinct de celui abritant l'enceinte scellée étanche principale délimitée par le piston émetteur (8) et est reliée à cette enceinte principale par une canalisation souple (59) de plus faible diamètre que le piston émetteur autorisant le déplacement relatif des deux corps l'un par rapport à l'autre.

10. Dispositif selon l'une des revendications 1 à 9, caractérisé en ce que le bord périphérique extérieur de la membrane roulante (16, 17, 52, 98, 98a) d'au moins un piston (8, 17a, 48, 92, 93) est serré de façon étanche entre deux pièces rigides (11-12, 12-13, 37-53, 96-100 ou 101-100) dont l'une (11, 37, 96, 101) porte l'alésage du piston (8, 17a, 48, 91, 93).

11. Dispositif selon la revendication 10, caractérisé en ce que l'autre des deux pièces rigides (12, 53, 100) délimite l'espace de confinement (14-15, 57, 94).

12. Dispositif selon la revendication 11, caractérisé en ce que l'autre des deux pièces rigides (12, 53, 100) délimite directement par sa paroi intérieure, la paroi de l'enceinte scellée étanche.

13. Dispositif selon l'une des revendications 1 à 12, caractérisé en ce qu'il comporte en outre deux conduits de remplissage (18, 19) en fluide de l'enceinte scellée étanche, dont l'un (19) est susceptible de déboucher en un point haut de l'enceinte au moment du remplissage de celle-ci pour permettre d'évacuer l'air de l'enceinte par mise en circulation du fluide au moment du remplissage à partir de l'autre conduit, et qui viennent déboucher sur des parois rigides intérieures de l'enceinte constituant l'espace de confinement.

14. Dispositif selon l'une des revendications 1 à 13, caractérisé en ce que le bord périphérique intérieur et/ou extérieur d'au moins l'une des membranes roulantes (15, 16, 52, 98, 98a) comporte au moins une nervure annulaire faisant saillie sur l'une des faces dudit bord réalisé en un matériau élastomère et en ce que ce bord est logé dans une rainure de la paroi rigide délimitant l'espace de confinement et dont la section est telle que la nervure annulaire est refoulée à l'intérieur de la masse d'élastomère dudit bord.

15. Dispositif selon l'une des revendications 1 à 14, caractérisé en ce que les espaces annulaires à l'extérieur de l'enceinte scellée communiquent entre eux.

16. Dispositif selon l'une des revendications 1 à 15, caractérisé en ce que les espaces annulaires à l'extérieur de l'enceinte scellée sont sensiblement isolés de l'atmosphère extérieure par tout moyen approprié tel que joint ou moyen de filtrage.

17. Dispositif selon l'une quelconque des revendications 1 à 16, caractérisé en ce que la position extrême de recul en position inactive du piston récepteur (17a) est délimitée par une butée de piston émetteur (8) de façon que le ressort de rappel du piston récepteur (17a) vers la position inactive applique au fluide de l'enceinte scellée une surpression par rapport à la pression régnant dans les espaces annulaires à l'extérieur de l'enceinte scellée.

18. Dispositif selon l'une des revendications 1 à 17, caractérisé en ce que les membranes roulantes d'au moins deux pistons émetteur et/ou récepteur (8, 17a) sont incluses dans un manchon élastique monobloc délimitant au moins une partie de l'enceinte scellée étanche et comportant une ouverture unique qui vient se refermer de façon étanche par un rebord annulaire sur l'un des pistons émetteur (8) ou récepteur (17a), les parties du manchon élastique autres que les membranes roulantes venant en appui soit sur les parois internes de l'espace de confinement (14, 15), soit sur la face frontale de l'autre piston émetteur (8) ou récepteur (17a).

## Claims

1. Force transforming device of the type comprising a tight enclosure, which is partly defined by and housed in a confinement space (14, 15), and filled with fluid having a hydrostatic behavior, at least one pressure-transmitter piston (8) guided axially for moving inside a bore issuing on to the confinement space and at least one pressure-receiving piston (17a) which is also axially guided for moving inside another bore (20) issuing on to the confinement space, characterized in that between the outer cylindrical wall of each of said pistons (8, 17a) and a cylindrical and adjacent wall of the confinement space (14, 15) substantially co-axial to the corresponding bore, there is provided an annular space in which is housed the annular fold of a flexible rolling membrane (16, 17) defining the enclosure and thus making it sealed and tight, each of the two membranes (16, 17) comprises a central part connected to or respectively applied on the front end of the corresponding piston (8, 17a) and a periphery sealingly connected to a rigid wall inside said confinement space (14, 15) to close off the opening of the bore on to said confinement space, and in that the flexible rolling membrane is adapted, on the one hand, to come in resting contact on the two cylindrical walls which are substantially co-axial to the piston (8, 17a) and to the confinement space (14, 15) under the action of the differential pressure applied on said membrane, which pressure is greater than the pressure prevailing outside said closed enclosure and on the other hand, to fold over, so as to wind and unwind around said piston (8, 17a), when the latter moves inside the confinement space (14, 15) in such a way that the hydrostatic behavior of the fluid of the sealed enclosure causes the membrane of at least one receiver piston (17a) to unwind, when the membrane of at least one transmitter piston (8) pressurizing the enclosure winds up and vice versa when at least a receiver piston pushes back the fluid out of the enclosure.

2. Force transforming device according to claim 1, characterized in that the pistons (8 and 17a) have different diameters so as to produce a transformation of the value of the forces.

3. Force transforming device according to claims 1 and 2, characterized in that the transmitter (4) and receiver (17a) pistons are disposed according to separate and/or non parallel axis.

4. Force transforming device according to claims 1 to 3, characterized in that the transmitter piston (8) is that of smaller diameter so as to produce an amplification of the forces on the receiver piston or pistons (17a).

5. Device as claimed in claims 1, 2 or 3, characterized in that the two pistons (8 and 17a) are mounted reversedly one with respect to the other and in substantially co-axial manner in the same body (2, 11, 12, 13, 24) and define between them, the tight and sealed enclosure constituting at least part of the confinement space (14, 15).

6. Device as claimed in claim 5, characterized in that the two pistons (8, 17a) are positioned so as to be able to be in contact, when the sealed and tight enclosure is emptied out of its fluid, thus reducing the volume of the sealed and tight enclosure and enabling the transmitter piston to actuate on its own the receiver piston in case of a leak of said fluid.

7. Device according to one of claims 1 to 6, applied to the transmission of a braking force, characterized in that the transmitter piston (8) is mechanically connected to a fluid actuating the service-brake (6) whereas the receiver piston (17a) is mechanically connected to a rod (22) actuating a brake.

8. Device according to claim 7, characterized in that the inside of the sealed and tight enclosure situated between the transmitter piston (8) and the receiver piston (17a) is sealingly connected by at least one pipe (59) with a chamber (57) constituting another sealed and tight enclosure defined by another transmitter piston (48) adapted to be actuated by an emergency brake member such as a spring or lock cylinder (30), said second transmitter piston (48) being also provided rolling membrane (52) defining another sealed and tight enclosure.

9. Device according to claim 7, characterized in that at least one other sealed and tight enclosure or intermediate chamber (57) is provided in a body (37-53) separate from that housing the main sealed and tight enclosure defined by the transmitter piston (8) and is connected to said main enclosure by a flexible pipe (59) of smaller diameter than the transmitter piston and authorizing the relative movement of the two bodies one with respect to the other.

10. Device as claimed in one of claims 1 to 9, characterized in that the peripheral external edge of the rolling membrane (16, 17, 52, 98, 98a) of at least one piston (8, 17a, 48, 92, 93) is tightly pressed between two rigid pieces (11-12, 12-13, 37-53, 96-100 or 100-101) of which one (11, 37, 96, 101) carries the bore of the piston (8, 17a, 48, 91, 93).

11. Device according to claim 10, characterized in that the other of the two rigid pieces (12, 53, 100) defines the confinement space (14-15, 57, 94).

12. Device according to claim 11, characterized in that the other of the two rigid pieces (12, 53, 100) directly defines by its inner wall, the wall of the sealed and tight enclosure.

13. Device according to one of claims 1 to 12, characterized in that it further comprises two pipes (18, 19) to fill the sealed and tight enclosure with fluid, one (19) of which is adapted to issue into a high point of the enclosure when the latter is filled to air release out of said enclosure by allowing the fluid to flow, at filling time, from the other pipe, both pipes issuing on to rigid inside walls of the enclosure constituting the confinement space.

14. Device according to one of claims 1 to 13, characterized in that the inner and/or outer peripheral edge of at least one of the rolling membranes (15, 16, 52, 98, 98a) comprises at least one annular rib projecting from one of the faces of said edge made from an elastomer material and in that said edge is housed inside a groove of the rigid wall defining the confinement space and the section of which is such that the annular groove is pressed back inside the mass of elastomer of said edge.

15. Device according to one of claims 1 to 14, characterized in that the annular spaces outside the sealed enclosure communicate together.

16. Device according to one of claims 1 to 15, characterized in that the annular spaces outside the sealed enclosure are substantially isolated from the outside atmosphere by any suitable means such as a sealing or a filtering means.

17. Device according to any one of claims 1 to 16, characterized in that the extreme back position to an inactive position of the receiver piston (17a) is defined by a transmitter piston (8) stop member so that the spring returning the receiver piston (17a) towards the inactive position applies to the fluid inside the sealed enclosure an overpressure with respect to the pressure prevailing inside the annular spaces outside the sealed enclosure.

18. Device according to one of claims 1 to 17, characterized in that the rolling membranes of at least two transmitter and/or receiver pistons (8, 17a) are contained inside a monobloc elastic sleeve defining at least part of the sealed and tight enclosure and comprising one opening which closes tightly by an annular rim over one of the transmitter (8) or receiver (17a) pistons, the parts of the elastic sleeve other than the rolling membranes resting either on the inner walls of the confinement space (14, 15), or on the front face of the other transmitter (8) or receiver (17a) piston.

**Ansprüche**

1. Kraftwandlervorrichtung des Typs mit einer dichten Zelle, die teilweise von einem umschlossenen Raum (14, 15) begrenzt bzw. in diesem angeordnet und mit einem Fluidum mit hydrostatischem Verhalten gefüllt ist, zumindest einem Druckabgabekolben (8), der zwecks Verschiebens in einer in den umschlossenen Raum mündenden Bohrung axial geführt ist, und zumindest einem Druckaufnahmekolben (17a), der ebenfalls zwecks Verschiebens in einer anderen, in den umschlossenen Raum mündenden Bohrung (20) axial geführt ist, dadurch gekennzeichnet, daß zwischen der zylindrischen Außenwand jedes der Kolben (8, 17a) und einer Wand des angrenzenden und im wesentlichen koaxial mit der entsprechenden Bohrung verlaufenden, zylindrischen umschlossenen Raumes (14, 15) ein Ringraum vorgesehen ist, in welchem die ringförmige Faltung einer einrollbaren, elastischen Membran (16, 17) untergebracht ist, die die Zelle begrenzt, indem sie sie schließt und dichtet, wobei jede der beiden Membranen (16, 17) einen mit dem vorderen Ende des jeweiligen Kolbens (8, 17a) verbundenen bzw. an diesem anliegenden Mittelteil und einen in dichtender Weise mit einer starren Wand im Inneren des umschlossenen Raumes (14, 15) verbundenen Rand zwecks Verschließens der Mündung der in diesen umschlossenen Raum mündenden Bohrung aufweist, und daß die einrollbare, elastische Membran einerseits auf den beiden zylindrischen, im wesentlichen koaxial mit dem Kolben (8, 17a) und dem umschlossenen Raum (14, 15) verlaufenden Wänden unter der Wirkung des Differentialdrucks, der auf die Membran aufgebracht und größer als der außerhalb der geschlossenen Zelle herrschende Druck ist, zur Anlage gelungen kann und sich anderseits zwecks Aufrollens an dem Kolben (8, 17a) bzw. Abrollens von demselben umstülpen kann, wenn sich letzterer im umschlossenen Raum (14, 15) bewegt, sodaß das hydrostatische Verhalten des Fluidums der abgeschlossenen Zelle die Membran von zumindest einem Aufnahmekolben (17a) zum Abrollen veranlaßt, wenn sich die Membran (16) an zumindest einem die Zelle unter Druck haltenden Abgabekolben (8) aufrollt und umgekehrt, wenn zumindest ein Aufnahmekolben das Fluidum der Zelle zurückdrängt.

2. Kraftwandlervorrichtung nach Anspruch 1, dadurch gekennzeichnet, daß die Kolben (8 und 17a) zwecks Umwandlung des Wertes der Kräfte unterschiedliche Durchmesser haben.

3. Kraftwandlervorrichtung nach den Ansprüchen 1 und 2, dadurch gekennzeichnet, daß die Abgabe- (48) und Aufnahme- (17a) Kolben entlang unterschiedlicher und/oder nicht paralleler Achsen angeordnet sind.

4. Kraftwandlervorrichtung nach einem der Ansprüche 1 bis 3, dadurch gekennzeichnet, daß der Abgabekolben (8) der mit dem kleineren Durchmesser ist, sodaß eine Kräfteverstärkung auf den bzw. die Aufnahmekolben (17a) erfolgt.

5. Vorrichtung nach einem der Ansprüche 1, 2 oder 3, dadurch gekennzeichnet, daß die beiden Kolben (8 und 17a) einander gegenüber und im wesentlichen koaxial in einem gemeisamen Körper (2, 11, 12, 13, 24) angeordnet sind und zwischen ihnen die geschlossene, dichte Zelle begrenzen, welche zumindest einen Teil des umschlossenen Raumes (14, 15) bildet.

6. Vorrichtung nach Anspruch 5, dadurch gekennzeichnet, daß die beiden Kolben (8, 17a) derart angeordnet sind, daß sie miteinander in Kontakt gelangen können, wenn das Fluidum aus der geschlossenen, dichten Zelle entfernt wird, sodaß das Volumen der geschlossenen, dichten Zelle reduziert wird und der Abgabekolben selbst beim Abfließen des Fluidums den Aufnahmekolben betätigen kann.

7. Vorrichtung nach einem der Ansprüche 1 bis 6 zur Übertragung einer Bremskraft, dadurch gekennzeichnet, daß der Abgabekolben (8) mechanisch mit einem Betriebsbremsenbetätigungskolben (6) verbunden ist, wobei der Aufnahmekolben (17a) mechanisch mit einer Bremsbetätigungsstange (22) verbunden ist.

8. Vorrichtung nach Anspruch 7, dadurch gekennzeichnet, daß das zwischen dem Abgabekolben (8) und dem Aufnahmekolben (17a) gelegene Innere der geschlossenen, dichten Zelle in dichtender Weise mittels zumindest einer Leitung (59) mit einer Kammer (57) verbunden ist, die eine andere geschlossene, dichte Zelle bildet, welche durch einen weiteren Abgabekolben (48) begrenzt ist, der durch ein Hilfsbremsorgan, wie einen Bremszylinder (30) mit Feder und/oder Verriegelung, betätigbar ist, wobei der zweite Abgabekolben (48) ebenfalls mit einer einrollbaren, elastischen Membran (52) versehen ist, die die andere geschlossene, dichte Zelle begrenzt.

9. Vorrichtung nach Anspruch 7, dadurch gekennzeichnet, daß zumindest eine weitere geschlossene, dichte Zelle oder eine Zwischenkammer (57) in einem Körper (37-53) vorgesehen ist, der von dem die geschlossene, dichte, vom Abgabekolben (8) begrenzte Hauptzelle umschließenden Körper unterschiedliche ist, und durch eine Schlauchleitung (59) mit dieser Hauptzelle verbunden ist, welche Schlauchleitung einen geringeren Durchmesser als der Abgabekolben hat und die Relativbewegung der beiden Körper zueinander gestattet.

10. Vorrichtung nach einem der Ansprüche 1 bis 9, dadurch gekennzeichnet, daß der äußere Rand der einrollbaren Membran (16, 17, 52, 98, 98a) zumindest eines Kolbens (8, 17a, 48, 92, 93) in dichtender Weise zwischen zwei starren Stücken (11-12, 12-13, 37-53, 96-100 oder 101-100) eingespannt ist, von denen eines (11, 37, 96, 101) die Bohrung des Kolbens (8, 17a, 48, 91, 93) trägt.

11. Vorrichtung nach Anspruch 10, dadurch gekennzeichnet, daß das andere der beiden starren Stücke (12, 53, 100) den umschlossenen Raum (14-15, 57, 94) begrenzt.

12. Vorrichtung nach Anspruch 11, dadurch gekennzeichnet, daß das andere der beiden starren Stücke (12, 53, 100) die Wand der geschlossenen, dichten Zelle mit seiner Innenwand direkt begrenzt.

13. Vorrichtung nach einem der Ansprüche 1 bis 12, dadurch gekennzeichnet, daß sie weiters zwei Leitungen (18, 19) zum Füllen der geschlossenen, dichten Zelle mit Fluidum umfaßt, von denen die eine (19) beim Füllen der Zelle zwecks Auslassens der Luft aus der Zelle durch Inzirkulationbringen des von der anderen Leitung beim Füllen ausgehenden Fluidums an einem hochgelegenen Punkt der Zelle einmünden kann, und die in den starren Innenwänden der den umschlossenen Raum bildenden Zelle einmünden.

14. Vorrichtung nach einem der Ansprüche 1 bis 13, dadurch gekennzeichnet, daß der untere und/oder äußere Umfangsrand zumindest einer der einrollbaren Membranen (15, 16, 52, 98, 98a) mindestens eine ringförmige Rippe umfaßt, die von einer der Flächen des aus einem elastomeren Material hergestellten Randes vorspringt, und daß dieser Rand in einer Nut der starren, den umschlossenen Raum begrenzenden Wand vorgesehen ist und einen derartigen Querschnitt aufweist, daß die ringförmige Rippe in das Innere der elastomeren Masse des Randes zurückgedrückt wird.

15. Vorrichtung nach einem der Ansprüche 1 bis 14, dadurch gekennzeichnet, daß die Ringräume außerhalb der geschlossenen Zelle miteinander Kommunizieren.

16. Vorrichtung nach einem der Ansprüche 1 bis 15, dadurch gekennzeichnet, daß die Ringräume außerhalb der geschlossenen Zelle durch geeignete Mittel, wie eine Dichtung oder ein Filter, im wesentlichen von der Außenatmosphäre getrennt sind.

17. Vorrichtung nach einem der Ansprüche 1 bis 16, dadurch gekennzeichnet, daß die Endlage des Aufnahmekolbens (17a) in der inaktiven Stellung durch einen Anschlag des Abgabekolbens (8) derart begrenzt ist, daß die Rückstellfeder des Aufnahmekolbens (17a) zur Inaktivstellung hin das Fludium der geschlossenen Zelle mit einem Überdruck gegenüber dem in den Ringräumen außerhalb der geschlossenen Zelle herrschenden Drucks beaufschlagt.

18. Vorrichtung nach einem der Ansprüche 1 bis 17, dadurch gekennzeichnet, daß die einrollbaren Membranen zumindest zweier Abgabe- und/oder Aufnahmekolben (8, 17a) in einer einstückigen, elastischen Muffe eingesetzt sind, die zumindest einen Teil der geschlossenen, dichten Zelle begrenzt und eine einzige Öffnung aufweist, die sich in dichtender Weise mit einer ringförmigen Überlappung über einem der Abgabe- (8) oder Aufnahme- (17a) -Kolben schließt, wobei die Teile der elastischen Muffe, ausgenommen die einrollbaren Membranen, entweder auf den Innenwänden des umschlossenen Raumes (14, 15) oder auf der Vorderseite des anderen Abgabe- (8) bzw. Aufnahme- (17a) -Kolbens zur Abstützung gelangen.

Fig. 1

Fig. 2

0 007 919